# EUROPÄISCHE PATENTSCHRIFT

(11) **EP 1 040 711 B1**
(45) Veröffentlichungstag und Bekanntmachung des Hinweises auf die Patenterteilung: **11.05.2005**
(21) Anmeldenummer: 98963375.5
(22) Anmeldetag: 23.11.1998
(51) Int. Cl.: H04Q 11/04, H04J 3/16

(54) **VORRICHTUNG ZUM SENDEN UND/ODER EMPFANGEN VON DATEN IN EINEM SDH- BZW. PDH-ÜBERTRAGUNGSSYSTEM**
DEVICE FOR TRANSMITTING AND/OR RECEIVING DATA IN AN SDH OR PDH TRANSMISSION SYSTEM
DISPOSITIF POUR TRANSMETTRE ET/OU RECEVOIR DES DONNEES DANS UN SYSTEME DE TRANSMISSION HNS OU HNP

(30) Priorität: 11.12.1997 DE 19755121; 20.02.1998 DE 19807186
(43) Veröffentlichungstag der Anmeldung: 04.10.2000
(73) Patentinhaber: SIEMENS AKTIENGESELLSCHAFT, 80333 München (DE)
(72) Erfinder: SINGER, Josef, D-86807 Buchloe (DE)
(86) Internationale Anmeldenummer: PCT/DE1998/003456
(87) Internationale Veröffentlichungsnummer: WO 1999/030527

(56) Entgegenhaltungen:
- US-A- 5 570 362
- US-A- 5 623 493
- JOHNSSON M ET AL: "SUPPORT FOR LOW BITRATE APPLICATIONS IN ATM NETWORKS" PROCEEDINGS OF IFIP WORKSHOP ON PERFORMANCE MODELLING AND EVALUATION OF ATM NETWORKS,3. Juni 1996, Seiten 39/1-39/14, XP002045906
- "B-ISDN ATM ADAPTATION LAYER SPECIFICATION: TYPE 2 AAL" ITU-T TELECOMMUNICATION STANDARIZATION SECTOR OF ITU,September 1997, Seiten A/B, I-III, 1 - 42, XP000770102 in der Anmeldung erwähnt

## Beschreibung

Die vorliegende Erfindung betrifft eine Vorrichtung und ein Verfahren zum Senden und/oder Empfangen von Daten, wie z. B. komprimierten Sprachdaten in einem SDH- bzw. PDH-Übertragungssystem.

Bei der Übertragung von Daten, wie z. B. von komprimierten Sprachdaten, in SDH- bzw. PDH-Übertragungssystemen (SDH: Synchrone Digitale Hierarchie, PDH: plesiochrone digitale Hierarchie) werden auf mehreren unterschiedlichen Sprachkanälen ankommende Daten im Zeitmultiplex zusammengefaßt und über einen einzelnen Kanal, wie z. B. einen 64 kbit/s-Kanal übertragen. Damit ergibt sich eine um dem Kompressionsfaktor höhere Ausnutzung des Übertragungsweges. Bisher wurden für das Zusammenfassen der Kanäle , wie z. B. im Mobilfunk, statische Multiplex-Verfahren verwendet. Die Voraussetzung dafür ist, daß alle auf den verschiedenen Sprachkanälen ankommenden Daten auf die gleiche Rate komprimiert werden und daß sich diese Rate während des Betriebes nicht ändert. Die Daten auf den verschiedenen Datenkanälen kommen regelmäßig an und werden statisch, d. h. nach einem bestimmten feststehenden Schema gemultiplext.

Das hat den Nachteil, daß eine flexible Übertragung unterschiedlicher Datenraten für die einzelnen Sprachkanäle nicht möglich ist. Weiterhin ist bei statischen Multiplexen keine Verringerung der Kanalbreite durch Sprachpausenunterdrückung möglich.

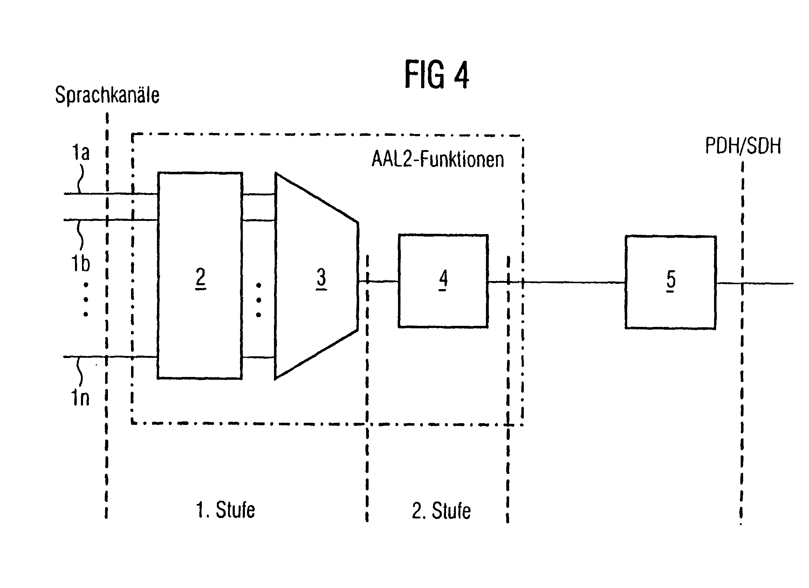

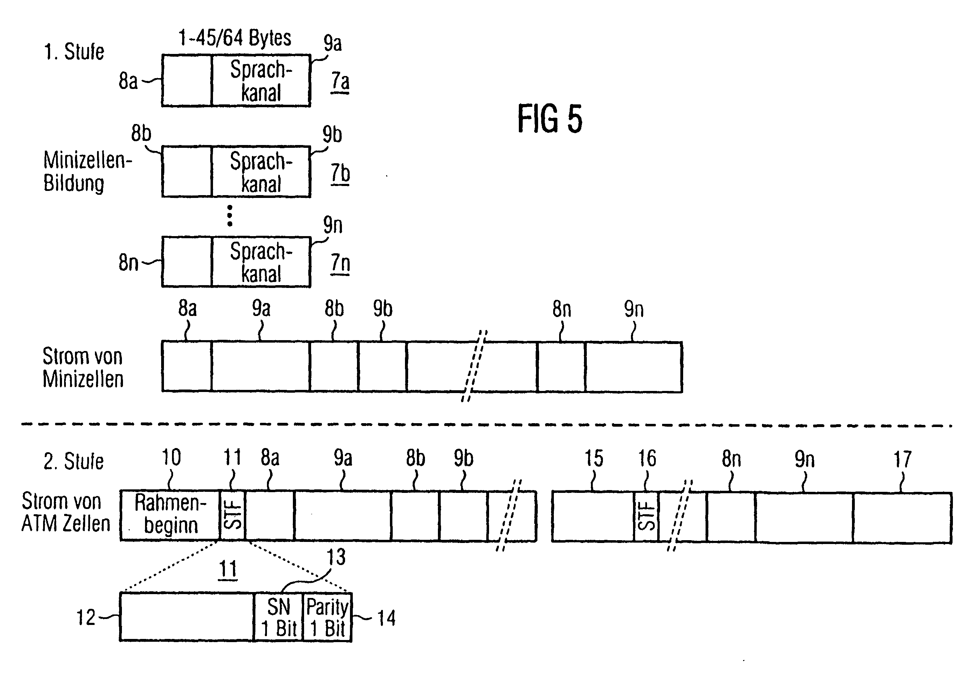

Für die gemeinsame Übertragung mehrerer Sprachkanäle über ATM-Übertragungsnetze (ATM: Asynchroner Transfermodus bzw. Asynchroner Übertragungsmodus) wurde der ATM-Adaptation Layer 2 (AAL 2) im Standard ITU-T I.363.2 definiert. Die AAL2-Spezifikation beschreibt ein zellenorientiertes zweistufiges Verfahren, das unter Bezug auf die Figuren 4 und 5 erläutert wird. In der ersten Stufe werden auf mehreren unterschiedlichen Sprachkanälen 1a, 1b, ... 1n zugeführte Sprachdaten in einer Einrichtung 2 in Minizellen 7 flexibler Länge angeordnet. Derartige Minizellen 7a, 7b, .. 7n sind beispielhaft in Fig. 5 dargestellt. Jede Minizelle weist an ihrem Anfang einen Minizellenkopf 8a, 8b, ... 8n auf. Der auf den jeweiligen Minizellenkopf folgende Teil der Minizellen 7a, 7b, ... 7n enthält die jeweiligen Sprachdaten 9a, 9b, ... 9n des jeweiligen Sprachkanales 1a, 1b, ... 1n.

Die Minizellen 7a, 7b, ... 7n werden in einer Einrichtung 3 zu einem einzigen Datenstrom zusammengefaßt, d. h. hintereinander angeordnet, wie in Fig. 5 dargestellt ist. Die Einrichtung 3 führt somit ein statistisches Multiplexen der Minizellen 7a, 7b, ... 7n durch, um sie zu einem einzigen Daten- bzw. Minizellenstrom zusammenzufassen.

In der zweiten Stufe des in der AAL2-Spezifikation beschriebenen Verfahrens wird der Datenstrom in einer Einrichtung 4 anschließend in ATM-Datenpakete verpackt. Mit anderen Worten werden in der Einrichtung 4 aus dem Datenstrom Datenpakete erzeugt, die dem asynchronen Übertragungsmodus entsprechen. Dabei wird jedem ATM-Datenpaket am Anfang ein ATM-Kopf 10 sowie ein Startfeld 11 hinzugefügt. Das Startfeld 11 enthält ein Offset-Feld 12 sowie eine Sequenznummer 13 und ein Paritätsbit 14. Das Offset-Feld 12 enthält dabei Informationen über die Position der jeweiligen Minizellen 7 in dem ATM-Datenpaket. Das folgende ATM-Datenpaket enthält in ähnlicher Weise einen ATM-Kopf 15, ein Startfeld 16 und eine Minizelle 7n. Der nicht benötigte Platz in diesem ATM-Datenpaket wird durch Fülldaten 17 aufgefüllt.

Die ATM-Datenpakete werden in einer Einrichtung 5 in Rahmenstrukturen, d. h. in Übertragungsrahmen umgesetzt, die dem SDH- bzw. PDH-Übertragungssystem entsprechen, in dem die Daten übertragen werden sollen. Die Übertragung kann dabei beispielsweise über Funk oder über feste Leitungen erfolgen. Die übertragenen SDH- bzw. PDH-Übertragungsrahmen werden von einer Empfangseinrichtung empfangen, die die entsprechenden inversen Einrichtungen wie die in Figur 4 gezeigte Sendevorrichtung aufweist. Der Nachteil dieses in der AAL2-Spezifikation beschriebenen Verfahrens ist, daß bevor die Sprachdaten in dem SDH- bzw. PDH-Übertragungssystem übertragen werden können, sie zuerst in ATM-Datenpakete eingefügt werden müssen, wodurch die zur Verfügung stehende bzw. die mögliche Übertragungsbandbreite verringert ist.

Das Dokument von Johnsson M. et al: "SUPPORT FOR LOW BITRATE APPLICATIONS IN ATM NETWORKS" PROCEEDINGS OF IPIP WORKSHOP ON PERFORMANCE MODELLING AND EVALUATION OF ATM NETWORKS, 3. Juni 1996, Seiten 39/1 bis 39/14, XP002045906 befasst sich mit dem Problem der niederbitratigen Datenübertragung (z.B. von Sprachdaten) über ein ATM-Netzwerk. Dabei werden die Daten ebenfalls in Minizellen angeordnet. Die Minizellen wiederum werden in einen ATM-Zellenfluß gemultiplext und über das ATM-Netz versendet.

Die Aufgabe der vorliegenden Erfindung ist damit, eine Vorrichtung zum Senden von Daten in einem SDH- bzw. PDH-Übertragungssystem gemäß dem Oberbegriff des beigefügten Anspruches 1, ein Verfahren zum Senden von Daten in einem SDH- bzw. PDH-Übertragungssystem gemäß dem beigefügten Anspruch 6, eine Vorrichtung zum Empfangen von Daten in einem SDH- bzw. PDH-Übertragungssystem gemäß dem Oberbegriff des beigefügten Anspruches 10 und ein VERfahren zum Empfangen von Daten in einem SDH- bzw. PDH-Übertragungssystem gemäß dem beigefügten Anspruch 15 bereitzustellen, die eine erhöhte Übertragungsbandbreite bei der Übertragung von Daten, z. B. von komprimierten Sprachdaten ermöglichen.

Diese Aufgabe wird gelöst durch eine Vorrichtung und ein Verfahren zum Senden von Daten in einem SDH- bzw. PDH-Übertragungssystem mit den Merkmalen des beigefügten Anspruches 1 bzw. den Merkmalen des beigefügten Anspruches 6. Die Aufgabe wird weiterhin gelöst durch eine Vorrichtung und ein Verfahren zum Empfangen von Daten in einem SDH-Übertragungssystem mit den Merkmalen des beigefügten Anspruches 10 bzw. des beigefügten Anspruches 15.

Die Vorrichtung und das Verfahren zum Senden von Daten in einem SDH- bzw. PDH-Übertragungssystem gemäß der vorliegenden Erfindung zeichnen sich insbesondere dadurch aus, daß anstelle bzw. alternativ zum Erzeugen von dem asynchronen Übertragungsmodus entsprechenden Datenpaketen (ATM-Datenpaketen) der aus den Minizellen bestehende einzige Datenstrom in direkter Weise in die Rahmenstruktur des SDH- bzw. PDH-Übertragungssystem abgebildet wird.

Entsprechend wird bei der Vorrichtung bzw. bei dem Verfahren zum Empfangen von Daten in einem SDH- bzw. PDH-Übertragungssystem gemäß der vorliegenden Erfindung anstelle bzw. alternativ zum Erzeugen von ATM-Datenpaketen aus den ankommenden, dem SDH- bzw. PDH-Übertragungssystem entsprechenden Ubertragungsrahmen in direkter Weise ein Datenstrom erzeugt, aus dem wiederum die Minizellen wiederhergestellt werden.

Die vorliegende Erfindung erlaubt dabei eine wesentlich bessere Ausnutzung der Übertragungsbandbreite in SDH- bzw. PDH-Übertragungssystemen, beispielsweise bei der Übertragung von komprimierten Sprachdaten. Weiterhin erlaubt die vorliegende Erfindung auch die Verwendung unterschiedlicher Kompressionsraten und Kompressionsverfahren innerhalb eines Multiplexbündels und insbesondere den Einsatz einer Sprachpausenunterdrükkung, bei der nicht benötigte Übertragungskapazitäten während der Sprechpausen beispielsweise durch statistisches Multiplexen mit den Sprachdaten anderer Kanäle aufgefüllt werden.

Vorteilhafte Ausgestaltungen der vorliegenden Erfindung sind in den jeweiligen Unteransprüchen definiert.

Vorteilhafterweise werden dabei bei der Vorrichtung bzw. dem Verfahren zum Senden von Daten gemäß der vorliegenden Erfindung für jeden direkt aus dem Datenstrom erzeugten Ubertragungsrahmen Positionsinformationen bezüglich der Lage der ersten Minizelle in dem Ubertragungsrahmen erzeugt. Diese Positionsdaten werden dabei vorteilhafterweise am Beginn des jeweiligen SDH- bzw. PDH- Übertragungsrahmens angeordnet. Weiterhin ist es vorteilhaft, wenn in der Vorrichtung bzw. dem Verfahren zum Senden von Daten beim Erzeugen des Datenstromes ein statistisches Zeitmultiplexen der in den mehreren Datenkanälen ankommenden Daten durchgeführt wird. Das statistische Zeitmultiplexen ermöglicht es, mit unterschiedlichen Kompressionsraten auf den verschiedenen Sprachkanälen ankommende Daten zu multiplexen und einen einzigen Datenstrom herzustellen. Falls die erfindungsgemäße Vorrichtung zum Senden von Daten auch Daten entsprechend der AAL2-Spezifikation übertragen können soll, so sind weiterhin eine Einrichtung zum Erzeugen von ATM-Datenpaketen aus dem Datenstrom und eine Einrichtung zum Erzeugen von dem SDH- bzw. PDH-Übertragungssystem entsprechenden Übertragungsrahmen aus den ATM-Datenpaketen vorzusehen. In diesem Fall kann die erfindungsgemäße Vorrichtung entweder in paralleler Weise oder alternativ Daten entsprechend dem AAL2-Standard und entsprechend der vorliegenden Erfindung übertragen. Insbesondere gewährleistet die vorliegende Erfindung dabei auch die Kompatibilität der Vorrichtung bzw. des Verfahrens zum Senden bzw. Empfangen von Daten mit der AAL2-Spezifikation und/oder mit höheren Schichten noch festzulegender Standards. Somit erlaubt die vorliegende Erfindung die Nutzung existierender und noch festzulegender AAL2-Standards unter Umgehung des mit der Nutzung von ATM-Zellen verbundenen Verlustes an Übertragungsbandbreite.

In der Vorrichtung bzw. dem Verfahren zum Empfangen von Daten gemäß der vorliegenden Erfindung wird der Datenstrom vorteilhafterweise auf der Basis von in jedem SDH- bzw. PDH-Übertragungsrahmen enthaltenen Positionsdaten bezüglich der Lage der ersten Minizelle in dem Übertragungsrahmen erzeugt. Vorteilhafterweise sind die Positionsdaten dabei am Beginn des jeweiligen Übertragungsrahmens angeordnet. Das Verteilen der in Minizellen in dem Datenstrom enthaltenen Daten wird durch Demultiplexen des Datenstromes entsprechend den im Minizellenkopf enthaltenen Informationen durchgeführt. Damit die erfindungsgemäße Vorrichtung zum Empfangen von Daten auch in einem Übertragungssystem verwendet werden kann, das auf der AAL2-Spezifikation beruht, sind vorteilhafterweise weiterhin eine Einrichtung zum Wiedergewinnen von dem ATM-Übertragungsmodus entsprechenden Datenpaketen aus den SDH- bzw. PDH-Übertragungsrahmen und eine Einrichtung zum Erzeugen des Datenstromes aus den ATM-Datenpaketen vorzusehen. Dabei kann der Empfang der Daten gemäß der AAL2-Spezifikation parallel oder alternativ zum erfindungsgemäßen Datenempfang erfolgen.

Die vorliegende Erfindung ist weiterhin auf ein System zur Übertragung von Daten in einem SDH- bzw. PDH-Übertragungssystem gerichtet, das eine Vorrichtung zum Senden von Daten und eine Vorrichtung zum Empfangen von Daten gemäß der vorliegenden Erfindung umfaßt.

Die vorliegende Erfindung wird nachfolgend anhand bevorzugter Ausführungsbeispiele in bezug auf die beigefügten Zeichnungen näher erläutert, in den zeigen:
Fig. 1 ein Blockdiagramm einer Vorrichtung zum Senden von Daten in einem SDH- bzw. PDH-Übertragungssystem gemäß der vorliegenden Erfindung,
Fig. 2 eine schematische Darstellung der erfindungsgemäß beim Senden von Daten erzeugten Minizellen und Übertragungsrahmen,
Fig. 3 ein Blockdiagramm einer Vorrichtung zum Empfangen von Daten in einem SDH- bzw. PDH-Übertragungssystem gemäß der vorliegenden Erfindung,
Fig. 4 ein Blockdiagramm einer Vorrichtung zum Senden von Daten in einem SDH- bzw. PDH-Übertragungssystem gemäß der AAL2-Spezifikation, und
Fig. 5 eine schematische Darstellung von gemäß der AAL2-Spezifikation erzeugten Minizellen und ATM-Zellen.

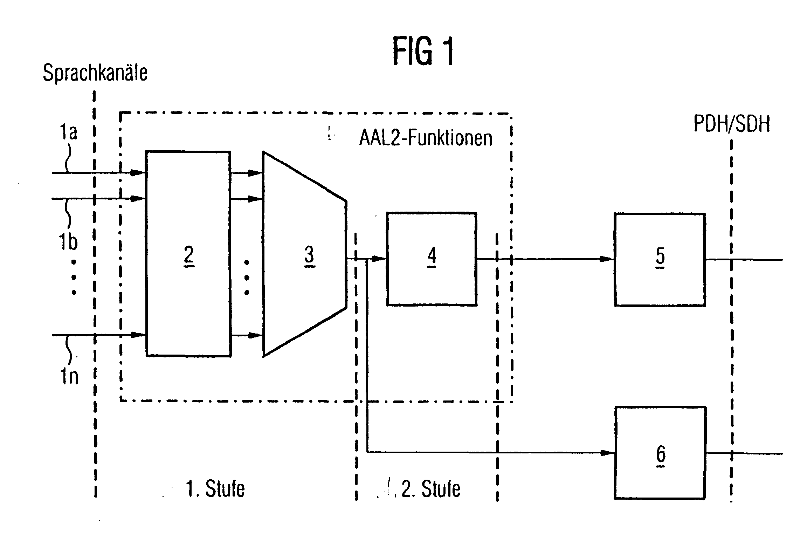

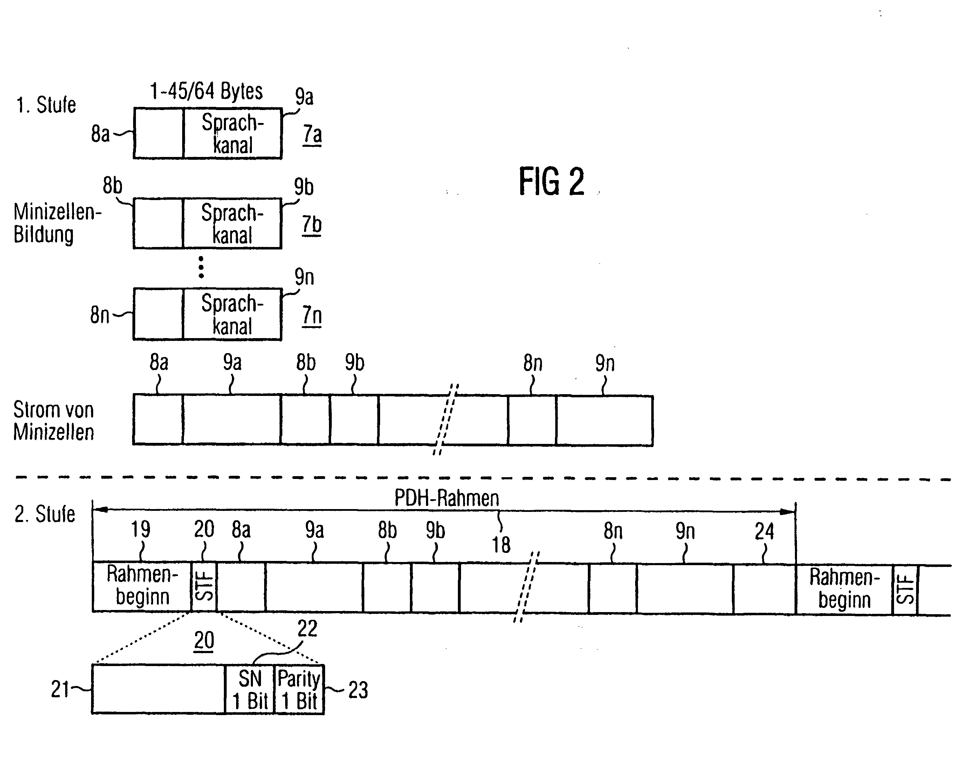

Fig. 1 zeigt ein Blockschaltbild eines Ausführungsbeispieles einer Vorrichtung zum Senden von Daten in einem SDH- bzw. PDH-Übertragungssystem gemäß der vorliegenden Erfindung. In mehreren unterschiedlichen Sprachkanälen 1a, 1b, ... 1n zugeführte Sprachdaten werden in einer Einrichtung 2 in Minizellen 7a, 7b, ... 7n angeordnet. Die Minizellen 7a, 7b, ... 7n haben flexible Längen abhängig von der jeweiligen Sprachdatenmenge, wie schematisch in Fig. 2 dargestellt ist. Den Anfang jeder Minizelle 7a, 7b, ... 7n bildet ein Minizellenkopf 8a, 8b, ... 8n, der von den jeweiligen Sprachdaten 9a, 9b, ... 9n entsprechender Länge gefolgt ist.

Die Minizellen 7a, 7b, ... 7n werden in einem statistischen Multiplexer 3 zu einem einzigen Datenstrom zusammengefaßt, wobei die gebildeten Minizellen in Abhängigkeit von ihrem zeitlichen Eintreffen aneinander gereiht werden, wie in Fig. 2 gezeigt ist.

Die in Fig. 1 gezeigte Sendevorrichtung weist auch einen Sendezweig gemäß der AAL2-Spezifikation auf, in dem eine Einrichtung 4 aus dem Datenstrom ATM-Datenpakete bzw. dem asynchronen Übertragungsmodus entsprechende Datenpakete erzeugt, aus denen wiederum in einer Einrichtung 5 Übertragungsrahmen erzeugt werden, die dem SDH- bzw. PDH-Übertragungssystem entsprechen.

Erfindungsgemäß werden je nach Anwendung unabhängig davon oder alternativ dazu aus dem Datenstrom in einer Einrichtung 6 in direkter Weise Übertragungsrahmen erzeugt, die dem SDH- bzw. PDH-Übertragungssystem entsprechen. In Fig. 2 ist beispielhaft die direkte Erzeugung eines PDH-Rahmens 18 aus dem Datenstrom dargestellt. Die Einrichtung 6 fügt dabei am Beginn des PDH-Übertragungsrahmens 18, d. h. hinter dem Rahmenbeginn 19, ein Startfeld 20 ein, das ein Offset-Feld 21, eine Sequenznummer 22 und ein Paritätsbit 23 enthält. In dem Offset-Feld 21 sind Daten enthalten, die die Position der ersten Minizelle 7a in dem PDH-Rahmen 18 kennzeichnen. Das Startfeld 20 des PDH-Rahmens 18 entspricht dabei im wesentlichen dem in Fig. 5 schematisch dargestellten Startfeld 11 der ATM-Datenpakete. Am Ende des PDH-Rahmens 18 werden Fülldaten 24 vorgesehen, um den nicht benötigten Platz aufzufüllen.

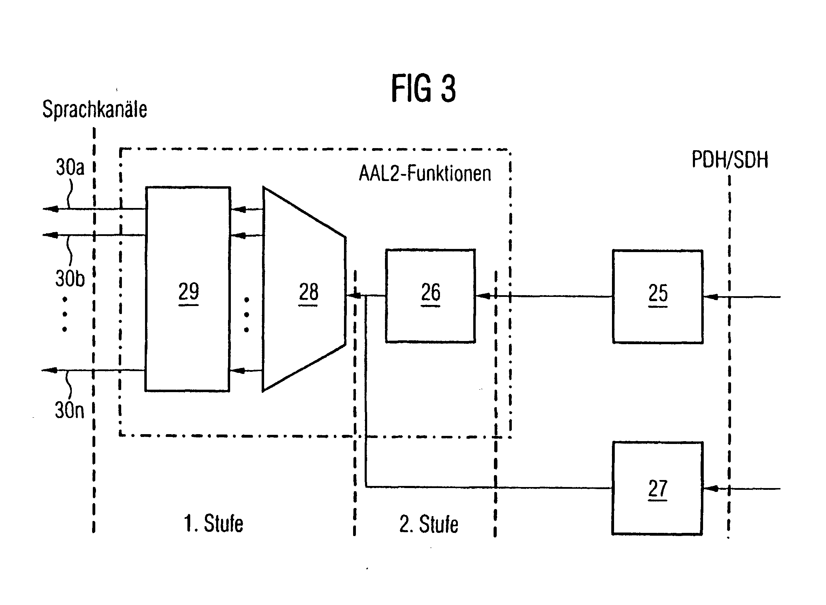

In Fig. 3 ist ein Blockschaltbild eines Ausführungsbeispiels einer Vorrichtung zum Empfangen von Daten in einem SDH- bzw. PDH-Übertragungssystem gemäß der vorliegenden Erfindung dargestellt. Die Empfangsvorrichtung ist ebenfalls zum alternativen oder parallelen Betrieb in einem der AAL2-Spezifikation entsprechenden Übertragungssystem ausgelegt und umfaßt in ihrem AAL2-Empfangszweig eine Einrichtung 25, an der Übertragungsrahmen ankommen, die dem SDH- bzw. PDH-Übertragungssystem entsprechen. Diese Daten können entweder beispielsweise über Mobilfunk oder über feste Leitungen übertragen werden. Die Einrichtung 25 erzeugt aus den dem SDH- bzw. PDH-Übertragungssystem entsprechenden Rahmen ATM- bzw. dem asynchronen Übertragungsmodus entsprechende Datenpakete. Eine Einrichtung 26 erzeugt einen aus Minizellen bestehenden Datenstrom aus den ATM-Zellen. Ein Demultiplexer 28 verteilt die in dem Datenstrom enthaltenen Minizellen auf die jeweiligen Sprachkanäle 30a, 30b ... 30n und eine Einrichtung 29 erzeugt aus der Information in den Minizellen die entsprechenden Sprachsignale. Die Einrichtungen 25, 26, 28 und 29 entsprechen somit der AAL2-Spezifikation.

Erfindungsgemäß ist eine Einrichtung 27 vorgesehen, in der die ankommenden Übertragungsrahmen, die dem SDH- bzw. PDH-Übertragungssystem entsprechen, direkt in einen Datenstrom umgesetzt werden. Die Einrichtung 27 arbeitet somit abhängig von den Erfordernissen unabhängig, alternativ oder parallel zu den Einrichtungen 25 und 26. Der in der Einrichtung 27 direkt erzeugte Datenstrom wird ähnlich wie der in der Einrichtung 26 regenerierte Datenstrom dem Demultiplexer 28 zugeführt.

Die vorliegende Erfindung umfaßt weiterhin ein Übertragungssystem, das eine Vorrichtung zum Senden von Daten entsprechend dem in Fig. 1 gezeigten Ausführungsbeispiel sowie eine Vorrichtung zum Empfangen von Daten gemäß dem in Fig. 3 gezeigten Ausführungsbeispiel enthält. Das SDH- bzw. PDH-Übertragungssystem, entsprechend dem die Daten übertragen werden, kann dabei ein Mobilfunksystem, ein System mit festen Leitungen etc. sein.

## Patentansprüche

1. Vorrichtung zum Senden von Daten in einem SDH- bzw. PDH-Übertragungssystem, mit
einer Einrichtung (2) zum Empfangen und Anordnen von in mehreren Datenkanälen (1) ankommenden Daten in Minizellen (7) flexibler Länge,
eine Einrichtung (3) zum Erzeugen eines einzigen Datenstromes aus den Minizellen, wobei die empfangenen Minizellen in dem Datenstrom aneinander gereiht werden,
**gekennzeichnet durch**
eine Einrichtung (6) zum direkten Erzeugen von Übertragungsrahmen aus dem Datenstrom und zum Versenden der erzeugten Übertragungsrahmen über ein SDH- bzw. PDH-Übertragungssystem, wobei die einzelnen Übertragungsrahmen eine Vielzahl von Minizellen enthalten und der Rahmenstruktur des SDH- bzw. PDH-Übertragungsystems entsprechen.

2. Vorrichtung zum Senden von Daten in einem SDH- bzw. PDH-Übertragungssystem gemäß Anspruch 1,
**gekennzeichnet durch**
eine Einrichtung (4) zum Erzeugen von einem asynchronen Übertragungsmodus entsprechenden Datenpaketen aus dem Datenstrom, und
eine Einrichtung (5) zum Erzeugen von dem SDH- bzw. PDH-Übertragungssystem entsprechenden Übertragungsrahmen aus den dem asynchronen Übertragungsmodus entsprechenden Datenpaketen.

3. Vorrichtung zum Senden von Daten in einem SDH- bzw. PDH-Übertragungssystem gemäß Anspruch 1 oder 2,
**dadurch gekennzeichnet,**
**daß** die Einrichtung (6) zum direkten Erzeugen von Ubertragungsrahmen aus dem Datenstrom in jedem Übertragungsrahmen Positionsdaten (20) bezüglich der Lage der ersten Minizelle in dem Übertragungsrahmen erzeugt.

4. Vorrichtung zum Senden von Daten in einem SDH- bzw. PDH-Übertragungssystem gemäß Anspruch 3,
**dadurch gekennzeichnet,**
**daß** die Einrichtung (6) zum direkten Erzeugen von Übertragungsrahmen aus dem Datenstrom die Positionsdaten (20) am Beginn eines jeweiligen Datenpaketes anordnet.

5. Vorrichtung zum Senden von Daten in einem Daten-Übertragungssystem gemäß einem der vorhergehenden Ansprüche,
**dadurch gekennzeichnet,**
**daß** die Einrichtung (3) zum Erzeugen eines einzigen Datenstroms eine Einrichtung zum statistischen Zeitmultiplexen der in den mehreren Datenkanälen (1) ankommenden Daten ist.

6. Verfahren zum Senden von Daten in einem SDH- bzw. PDH-Übertragungssystem, mit folgenden Schritten:
Empfangen und Anordnen von in mehreren Datenkanälen ankommenden Daten in Minizellen flexibler Länge, wobei die empfangenen Minizellen in dem Datenstrom hintereinander angeordnet werden,
Erzeugen eines einzigen Datenstromes aus den Minizellen, und direktes Erzeugen von Übertragungsrahmen aus dem Datenstrom und Versenden der erzeugten Übertragungsrahmen über ein SDH- bzw. PDH-Übertragungssystem, wobei die einzelnen Übertragungsrahmen eine Vielzahl von Minizellen enthalten und der Rahmenstruktur des SDH- bzw. PDH-Übertragungssystems entsprechen.

7. Verfahren zum Senden von Daten in einem SDH- bzw. PDH-Übertragungssystem gemäß Anspruch 6,
**dadurch gekennzeichnet,**
**daß** beim direkten Erzeugen von dem SDH- bzw. PDH-Übertragungs-system entsprechenden Übertragungsrahmen für jeden Übertragungsrahmen Positionsdaten bezüglich der Lage der ersten Minizelle in dem Übertragungsrahmen erzeugt werden.

8. Verfahren zum Senden von Daten in einem SDH- bzw. PDH-Übertragungssystem gemäß Anspruch 6,
**dadurch gekennzeichnet,**
**daß** die Positionsdaten am Beginn eines jeweiligen Übertragungsrahmens angeordnet werden.

9. Verfahren zum Senden von Daten in einem SDH- bzw. PDH-Übertragungssystem gemäß einem der Ansprüche 6 bis 8,
**dadurch gekennzeichnet,**
**daß** beim Erzeugen des Datenstroms ein statistisches Zeitmultiplexen der in den mehreren Datenkanälen ankommenden Daten durchgeführt wird.

10. Vorrichtung zum Empfangen von Daten in einem SDH- bzw. PDH-Übertragungssystem, mit
einer Einrichtung (27) zum Empfangen und direkten Erzeugen eines einzigen Datenstroms von Minizellen aus den der Rahmenstruktur des SDH- bzw. PDH-Übertragungssystem entsprechenden ankommenden Übertragungsrahmen,
einer Einrichtung (28) zum Verteilen von in Minizellen in dem Datenstrom enthaltenen Daten auf jeweilige Datenkanäle, und einer Einrichtung (29) zum Wiederherstellen der Daten der einzelnen Datenkanäle (30) aus den Minizellen.

11. Vorrichtung zum Empfangen von Daten in einem SDH- bzw. PDH-Übertragungssystem gemäß Anspruch 10,
**gekennzeichnet durch**
eine Einrichtung (25) zum Wiedergewinnen von einem asynchronen Übertragungsmodus entsprechenden Datenpaketen aus den dem SDH- bzw. PDH-Übertragungssystem entsprechenden ankommenden Übertragungsrahmen, und
eine Einrichtung (26) zum Erzeugen des Datenstromes aus den dem asynchronen Übertragungsmodus entsprechenden Datenpaketen.

12. Vorrichtung zum Empfangen von Daten in einem SDH- bzw. PDH-Übertragungssystem gemäß Anspruch 10 oder 11,
**dadurch gekennzeichnet,**
**daß** die Einrichtung (27) zum Empfangen und direkten Erzeugen des Datenstroms aus den dem SDH- bzw. PDH-Übertragungssystem entsprechenden ankommenden Übertragungsrahmen den Datenstrom auf der Basis von in jedem Übertragungsrahmen enthaltenen Positionsdaten (20) bezüglich der Lage der ersten Minizelle in dem Übertragungsrahmen erzeugt.

13. Vorrichtung zum Empfangen von Daten in einem SDH- bzw. PDH-Übertragungssystem gemäß Anspruch 12,
**dadurch gekennzeichnet,**
**daß** die Positionsdaten (20) am Beginn eines jeweiligen Übertragungsrahmens anordnet sind.

14. Vorrichtung zum Empfangen von Daten in einem SDH- bzw. PDH-Übertragungssystem gemäß einem der Ansprüche 10 bis 13,
**dadurch gekennzeichnet,**
**daß** die Einrichtung (28) zum Verteilen der Daten eine Einrichtung zum Demultiplexen des Datenstromes entsprechend der im Minizellenkopf enthaltenen Information ist.

15. Verfahren zum Empfangen von Daten in einem SDH- bzw. PDH-Übertragungssystem, mit folgenden Schritten:
Empfangen und direktes Erzeugen eines einzigen Datenstromes aus den der Rahmenstruktur des SDH- bzw. PDH-Übertragungssystems entsprechenden ankommenden Übertragungsrahmen, Verteilen von in Minizellen in dem Datenstrom enthaltenen Daten auf jeweilige Datenkanäle, und
Wiederherstellen der Daten der einzelnen Datenkanäle aus den Minizellen.

16. Verfahren zum Empfangen von Daten in einem SDH- bzw. PDH-Übertragungssystem gemäß Anspruch 15,
**dadurch gekennzeichnet,**
**daß** der Datenstrom auf der Basis von in jedem Übertragungsrahmen enthaltenen Positionsdaten bezüglich der Lage der ersten Minizelle in dem Übertragungsrahmen erzeugt wird.

17. Verfahren zum Empfangen von Daten in einem SDH- bzw. PDH-Übertragungssystem gemäß Anspruch 16,
**dadurch gekennzeichnet,**
**daß** die Positionsdaten am Beginn eines jeweiligen Übertragungsrahmen angeordnet sind.

18. Verfahren zum Empfangen von Daten in einem SDH- bzw. PDH-Übertragungssystem gemäß einem der Ansprüche 15 bis 17,
**dadurch gekennzeichnet,**
**daß** beim Verteilen der Daten ein Demultiplexen des Datenstromes entsprechend der im Minizellenkopf enthaltenen Information durchgeführt wird.

## Claims

1. Arrangement for transmitting data in an SDH or PDH transmission system, with
a device (2) for receiving and arranging into flexible-length minicells (7) data arriving on a plurality of data channels (1),
a device (3) for creating a single data stream from the minicells, with the received minicells being arranged next to one another in the data stream,
**characterized by**
a device (6) for direct creation of transmission frames from the data stream and for sending the created transmission frames over an SDH or PDH transmission system, where the individual transmission frames contain a plurality of minicells and comply with the frame structure of the SDH or PDH transmission system.

2. Device for transmitting data in an SDH or PDH transmission system in accordance with Claim 1,
**characterized by**
a device (4) for creating data packets complying with an asynchronous transmission mode from the data stream, and
a device (5) for creating transmission frames complying with the SDH or PDH transmission system from the data packets complying with the asynchronous transmission mode.

3. Device for transmitting data in an SDH or PDH transmission system in accordance with Claim 1 or 2,
**characterized in that**,
to directly create transmission frames from the data stream, the device (6) creates in each transmission frame position data (20) relating to the position of the first minicell in the transmission frame.

4. Device for transmitting data in an SDH or PDH transmission system in accordance with Claim 3,
**characterized in that**,
to directly create transmission frames from the data stream, the device (6) arranges the position data(20) at the beginning of the relevant data packet.

5. Device for transmitting data in a data transmission system in accordance with one of the previous claims
**characterized in that**
the device (3) for creating a single data stream is a device for statistical time division multiplexing of the data arriving in the plurality of data channels (1).

6. Method for transmitting data in an SDH or PDH transmission system, with the following steps:
Receiving and arranging into minicells of flexible length data arriving in a plurality of data channels, with the received minicells being arranged one after another in the data stream, Creating a single data stream from the minicells, and direct creation of transmission frames from the data stream and
transmission of the transmission frames created over and SDH or PDH transmission system, with the individual transmission frames containing a plurality of minicells and complying with frame structure of the SDH or PDH transmission system.

7. Method for transmitting data in an SDH or PDH transmission system in accordance with Claim 6,
**characterized in that**
for direct creation of the transmission frames complying with the SDH or PDH transmission system, position data relating to the position of the first minicell in the transmission frame is created for each transmission frame.

8. Method for transmitting data in an SDH or PDH transmission system in accordance with Claim 6,
**characterized in that**
the position data is arranged at the beginning of the relevant transmission frame.

9. Method for transmitting data in an SDH or PDH transmission system in accordance with one of the Claims 6 to 8
**characterized in that**
on creation of the data stream a statistical time division the data arriving in the plurality of data channels is multiplexed.

10. Arrangement for receiving data in an SDH or PDH transmission system, with
A device (27) for receiving and direct creation of a single data stream of minicells from the corresponding incoming transmission frames complying with the frame structure of the SDH or PDH transmission system,
A device (28) for distributing data contained in minicells in the data stream to the relevant data channels, and a device (29) for restoring the data of the individual data channels (30) from the minicells

11. Device for receiving data in an SDH or PDH transmission system in accordance with Claim 10,
**characterized by**
a device (25) for recovering data packets complying with an asynchronous transmission mode from the incoming transmission frames complying with the SDH or PDH transmission system, and
a device (26) for creating the data stream from the data packets complying with the asynchronous transmission mode.

12. Device for receiving data in an SDH or PDH transmission system in accordance with Claim 10 or 11,
**characterized in that**,
the device (27) for receiving and direct creation of the data stream from the incoming transmission frames complying with the SDH or PDH transmission system creates the data stream on the basis of position data (20) relating to the position of the first minicell in the transmission frame contained in each transmission frame.

13. Device for receiving data in an SDH or PDH transmission system in accordance with Claim 12,
**characterized in that**,
the position data (20) is arranged at the beginning of the relevant transmission frame.

14. Arrangement for receiving data in an SDH or PDH transmission system in accordance with one of the Claims 10 to 13
**characterized in that**,
the device (28) for distributing data is a device for demultiplexing the data stream in accordance with information contained in the minicell header.

15. Method for receiving data in an SDH or PDH transmission system, with the following steps: Receipt and direct creation of an single data stream from the corresponding incoming transmission frames complying with the frame structure of the SDH or PDH transmission system, distribution of data contained in minicells in the bit data stream to the relevant data channels, and
Restoring the data of the individual data channels from the minicells.

16. Method for receiving data in an SDH or PDH transmission system in accordance with Claim 15,
**characterized in that**,
the data stream is created on the basis of position data contained in each transmission frame relating to the position of the first minicell in the transmission frame.

17. Method for receiving data in an SDH or PDH transmission system in accordance with Claim 16,
**characterized in that**,
the position data is arranged at the beginning of a relevant transmission frame.

18. Method for receiving data in an SDH or PDH transmission system in accordance with one of the Claims 15 to 17
**characterized in that**,
on distribution of the data the data stream is demultiplexed in accordance with information contained in the minicell header.

## Revendications

1. Dispositif pour transmettre des données dans un système de transmission SDH resp. PDH, comprenant
un dispositif (2) pour recevoir et placer des données arrivant dans plusieurs canaux de données (1) dans des mini-cellules (7) de longueur flexible,
un dispositif (3) pour générer un seul flux de données à partir des mini-cellules, les mini-cellules reçues étant placées l'une à côté de l'autre dans le flux de données,
**caractérisé par**
un dispositif (6) pour la génération directe de trames de transmission à partir du flux de données et pour l'envoi des trames de transmission générées par l'intermédiaire d'un système de transmission SDH resp. PDH, les différentes trames de transmission contenant une pluralité de mini-cellules et correspondant à la structure des trames du système de transmission SDH resp. PDH.

2. Dispositif pour transmettre des données dans un système de transmission SDH resp. PDH selon la revendication 1,
**caractérisé par**
un dispositif (4) pour générer des paquets de données correspondant à un mode de transmission asynchrone à partir du flux de données, et
un dispositif (5) pour générer des trames de transmission correspondant au système de transmission SDH resp. PDH à partir des paquets de données correspondant au mode de transmission asynchrone.

3. Dispositif pour transmettre des données dans un système de transmission SDH resp. PDH selon la revendication 1 ou 2,
**caractérisé en ce que**
le dispositif (6) pour la génération directe de trames de transmission à partir du flux de données génère dans chaque trame de transmission des données de position (20) concernant la position de la première mini-cellule dans la trame de transmission.

4. Dispositif pour transmettre des données dans un système de transmission SDH resp. PDH selon la revendication 3,
**caractérisé en ce que**
le dispositif (6) pour la génération directe de trames de transmission à partir du flux de données place les données de position (20) au début d'un paquet de données respectif.

5. Dispositif pour transmettre des données dans un système de transmission de données selon l'une des revendications précédentes,
**caractérisé en ce que**
le dispositif (3) pour générer un seul flux de données est un dispositif de multiplexage temporel statistique des données arrivant dans lesdits plusieurs canaux de données (1).

6. Procédé pour transmettre des données dans un système de transmission SDH resp. PDH, comprenant les étapes suivantes :
recevoir et placer des données arrivant dans plusieurs canaux de données dans des mini-cellules de longueur flexible, les mini-cellules reçues étant placées l'une à côté de l'autre dans le flux de données,
générer un seul flux de données à partir des mini-cellules et génération directe de trames de transmission à partir du flux de données et envoi des trames de transmission générées par l'intermédiaire d'un système de transmission SDH resp. PDH, les différentes trames de transmission contenant une pluralité de mini-cellules et correspondant à la structure des trames du système de transmission SDH resp. PDH.

7. Procédé pour transmettre des données dans un système de transmission SDH resp. PDH selon la revendication 6,
**caractérisé en ce que**
lors de génération directe de trames de transmission correspondant au système de transmission SDH resp. PDH des données de position concernant la position de la première mini-cellule dans la trame de transmission sont générées pour chaque trame de transmission.

8. Procédé pour transmettre des données dans un système de transmission SDH resp. PDH selon la revendication 6,
**caractérisé en ce que**
les données de position sont placées au début d'une trame de transmission respective.

9. Procédé pour transmettre des données dans un système de transmission SDH resp. PDH selon l'une des revendications 6 à 8,
**caractérisé en ce que**
lors de la génération du flux de données un multiplexage temporel statistique des données arrivant dans lesdits plusieurs canaux de données est effectué.

10. Dispositif pour recevoir des données dans un système de transmission SDH resp. PDH, comprenant
un dispositif (27) pour la réception et la génération directe d'un seul flux de données de mini-cellules à partir des trames de transmission correspondant à la structure des trames du système de transmission SDH resp. PDH,
un dispositif (28) pour répartir des données contenues dans des mini-cellules dans le flux de données sur des canaux de données respectifs, et
un dispositif (29) pour reconstituer les données des différents canaux de données (30) à partir des mini-cellules.

11. Dispositif pour recevoir des données dans un système de transmission SDH resp. PDH selon la revendication 10,
**caractérisé par**
un dispositif (25) pour récupérer des paquets de données correspondant à un mode de transmission asynchrone à partir des trames de transmission arrivant correspondant au système de transmission SDH resp. PDH, et
un dispositif (26) pour générer un flux de données à partir des paquets de données correspondant au mode de transmission asynchrone.

12. Dispositif pour recevoir des données dans un système de transmission SDH resp. PDH selon la revendication 10 ou 11,
**caractérisé en ce que**
le dispositif (27) pour la réception et la génération directe du flux de données à partir des trames de transmission arrivant correspondant au système de transmission SDH resp. PDH génère le flux de données sur la base de données de position (20) concernant la position de la première mini-cellule dans la trame de transmission, contenues dans chaque trame de transmission.

13. Dispositif pour recevoir des données dans un système de transmission SDH resp. PDH selon la revendication 12;
**caractérisé en ce que**
les données de position (20) sont placées au début d'une trame de transmission respective.

14. Dispositif pour recevoir des données dans un système de transmission SDH resp. PDH selon l'une des revendications 10 à 13,
**caractérisé en ce que**
le dispositif (28) pour répartir les données est un dispositif pour démultiplexer le flux de données selon l'information contenue dans l'en-tête des mini-cellules.

15. Procédé pour recevoir des données dans un système de transmission SDH resp. PDH, comprenant les étapes suivantes :
réception et génération directe d'un seul flux de données à partir des trames de transmission arrivant correspondant à la structure des trames du système de transmission SDH resp. PDH,
répartition des données contenues dans des mini-cellules dans le flux de données sur des canaux de données respectifs, et
reconstitution des données des différents canaux de données à partir des mini-cellules.

16. Procédé pour recevoir des données d ans un système de transmission SDH resp. PDH selon la revendication 15,
**caractérisé en ce que**
le flux de données est généré sur la base de données de position concernant la position de la première mini-cellule dans la trame de transmission, contenues dans chaque trame de transmission.

17. Procédé pour recevoir des données d ans un système de transmission SDH resp. PDH selon la revendication 16,
**caractérisé en ce que** les données de position sont placées au début d'une trame de transmission respective.

18. Procédé pour recevoir des données d ans un système de transmission SDH resp. PDH selon l'une des revendications 15 à 17,
**caractérisé en ce que**
lors de la répartition des données un démultiplexage du flux de données est effectué selon l'information contenue dans l'en-tête des mini-cellules.
